(19) Europäisches Patentamt
European Patent Office
Office européen des brevets

(11) **EP 4 737 428 A1**

(12) **EUROPEAN PATENT APPLICATION**
published in accordance with Art. 153(4) EPC

(43) Date of publication:
06.05.2026 Bulletin 2026/19

(21) Application number: 24832136.6

(22) Date of filing: 28.06.2024

(51) International Patent Classification (IPC):
C04B 35/52 (2006.01)    B32B 9/00 (2006.01)
B32B 9/04 (2006.01)    C01B 32/914 (2017.01)
C04B 41/87 (2006.01)

(52) Cooperative Patent Classification (CPC):
B32B 9/00; B32B 9/04; C01B 32/914; C04B 35/52;
C04B 41/87

(86) International application number:
PCT/JP2024/023628

(87) International publication number:
WO 2025/005279 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023 JP 2023107245
01.09.2023 JP 2023141903

(71) Applicant: Mitsui Kinzoku Company, Limited
Tokyo 141-8584 (JP)

(72) Inventors:
• HARA Syuhei
Omuta-shi, Fukuoka 836-0003 (JP)
• MATSUO Ken
Omuta-shi, Fukuoka 836-0003 (JP)
• NIKATA Soichiro
Omuta-shi, Fukuoka 836-0003 (JP)

(74) Representative: Parker, Andrew James
Meissner Bolte Partnerschaft mbB
Patentanwälte Rechtsanwälte
Postfach 86 06 24
81633 München (DE)

(54) **COATED STRUCTURE MANUFACTURING METHOD, AND COATED STRUCTURE**

(57) A method for producing a coating structure of the present invention is a method for producing a coating structure having a metal-carbon composite coating on a carbon substrate, the method including an application step of applying a metal compound-containing substance onto the carbon substrate, and a heating step of heating the coated carbon substrate to form a metal-carbon composite coating on the carbon substrate. The coating structure of the present invention is a coating structure in which a metal-carbon composite coating is formed on a carbon substrate, and the metal-carbon composite coating is formed by heating the metal compound-containing substance applied onto the carbon substrate.

FIG. 1

## Description

Technical Field

The present invention relates to a method for producing a coating structure, and a coating structure.

Background Art

In a member required to have heat resistance and reaction resistance (for example, oxidation resistance and chemical resistance), heat resistance and reaction resistance can be improved by forming a protective film such as a metal compound on the surface of a substrate of the member, and the life of the member can be extended.

For example, when a tantalum carbide layer is formed as a protective film on the surface of a carbon substrate, it is common to use a CVD apparatus as disclosed in Patent Literature 1.

Citation List

Patent Literature

Patent Literature 1: WO 2004/009515 A

Summary of Invention

Technical Problem

However, the size and shape of the substrate capable of forming the protective film on the surface are determined in advance for each CVD apparatus, and the protective film could not be formed on the surface depending on the size and shape of the substrate. In addition, the step of forming the protective film on the surface of the substrate using the CVD apparatus took a considerable time.

In view of the above problems, an object of the present invention is to provide a method for producing a coating structure, and a coating structure, regardless of the size and shape of the substrate.

Solution to Problem

A method for producing a coating structure of the present invention made to solve the above problems is a method for producing a coating structure having a metal-carbon composite coating on a carbon substrate, the method including an application step of applying a metal compound-containing substance onto the carbon substrate, and a heating step of heating the coated carbon substrate to form a metal-carbon composite coating on the carbon substrate.

In the present description, the "metal-carbon composite coating" may be present in a state in which a metal element and a carbon element are bonded in the coating, such as a metal carbide alone or a carbon-containing material containing a metal carbide. In addition, the "metal-carbon composite coating" may be present in a state in which a metal compound other than the metal carbide is dispersed in the carbon-containing material, that is, not a state in which the metal element and the carbon element are bonded in the coating, but a state in which the metal element and the carbon element are in a mixed or dispersed state. Examples of the metal compound other than the metal carbide include metal oxides, metal nitrides, metal sulfides, and metal hydroxides.

Here, the coating structure to be produced by the method for producing a coating structure of the present invention includes a coating structure having a metal-carbon composite coating on a carbon substrate, and for example, a coating structure having a metal-carbon composite coating on at least one surface (for example, the surface) of the carbon substrate, a coating structure having a metal-carbon composite coating on the entire peripheral surface of the carbon substrate, and a coating structure having a metal-carbon composite coating on a part of one surface of the carbon substrate.

First, in the application step according to the method for producing a coating structure of the present invention, a metal compound-containing substance is applied onto a carbon substrate.

The carbon substrate to be used in the method for producing a coating structure of the present invention may be a substrate composed only of carbon, a substrate containing carbon as a main component and having a carbon content of 50 mass% or more, or a substrate having a multilayer structure and having an outermost layer composed only of carbon or containing carbon as a main component and having a carbon content of 50 mass% or more. The carbon substrate is particularly preferably a substrate composed only of carbon.

Also, the size and shape of the carbon substrate are not particularly limited as long as the carbon substrate can be heated in a stationary furnace used in a heating step to be described later. Specific examples of the carbon substrate include a crucible, a furnace material, an electrode, a fiber, a filtration device, a filter, a protective tube, a heater tube, a burner nozzle, and a refractory jig.

Examples of the carbon material of the carbon substrate include fullerene, carbon nanotube, carbon nanofiber, graphene, graphene oxide, carbon nanohorn, diamond, hyperdiamond, and carbon fiber.

In addition, the carbon material may be composed only of carbon or other materials containing carbon. Further, the structure of the carbon material may have a uniform tissue structure or a non-uniform tissue structure. The uniform tissue structure may be hollow or porous. Also, the non-uniform tissue structure may be, for example, a sea-island form, multilayer, hollow, or porous.

Furthermore, the shape of the carbon material may be a powder shape, a plate shape, a film shape, a fiber shape, or the like, and may be a molded body thereof, that is, a mixture, a multilayer body, a green compact, a sintered body, a fiber bundle body, a nonwoven body, or a woven fabric body (plain weave, twill weave, satin weave, and basket weave).

The carbon material is particularly preferably a fibrous material, and specific examples thereof include metal fibers (steel fibers and the like), ceramic fibers (metal oxide fibers, metal carbide fibers, metal nitride fibers, silicon carbide fibers, glass fibers, and the like), and polymer fibers (natural polymer fibers, polysaccharide fibers, cellulose fibers, artificial polymer fibers, resin fibers, carbon fibers, and the like).

In addition, the metal compound-containing substance used in the method for producing a coating structure of the present invention contains a compound of at least one metal element selected from Ti, Nb, Mo, Hf, Ta, W, Zr, and Si.

Examples of the metal compound-containing substance include those containing a compound of at least one metal element selected from Ti, Nb, Mo, Hf, Ta, W, Zr, and Si. Specific examples thereof include a peroxo complex metal compound containing at least one metal element selected from Ti, Nb, Mo, Hf, Ta, W, Zr, and Si (for example, a peroxohydroxy acid complex metal compound, a peroxocitrate complex metal compound, or a peroxoammonium complex metal compound), a metal hydroxide, a hydroxy acid complex metal compound (for example, an ammonium oxalate complex metal compound), and a polyacid, but are not limited to these compounds. Moreover, the metal compound-containing substance may contain a metal element other than at least one metal element selected from Ti, Nb, Mo, Hf, Ta, W, Zr, and Si, a metalloid element, and a nonmetal element. Examples thereof include B and P.

When the metal compound-containing substance is a peroxo complex metal compound, even if a substrate does not contain carbon, by heating a substrate coated with the peroxo complex metal compound, the metal element contained in the peroxo complex metal compound reacts with carbon to form a metal carbide. Also, when the metal compound-containing substance is a hydroxy acid complex metal compound, the metal element contained in the hydroxy acid complex metal compound reacts with carbon in the same manner to form a metal carbide.

The content of the metal compound-containing substance is preferably adjusted according to the type of the metal element or the carbon substrate, more preferably more than 0 mass% and 40 mass% or less, still more preferably 0.1 mass% or more and 30 mass% or less, particularly preferably 0.2 mass% or more and 30 mass% or less, and more particularly preferably 0.3 mass% or more and 15 mass% or less. When the metal compound-containing substance contains a plurality of metal elements selected from Ti, Nb, Mo, Hf, Ta, W, Zr, and Si, the total value of the mass fractions is preferably within the above-described numerical range.

Here, the content of the metal compound-containing substance may be calculated by appropriately diluting the metal compound-containing substance with dilute hydrochloric acid as necessary, and measuring the mass fraction in terms of metal in accordance with JIS K0116:2014 using ICP emission spectrometry (manufactured by Agilent Technologies, Inc.: AG-5110).

In addition, the content of the compound of at least one metal element selected from Ti, Nb, Mo, Hf, Ta, W, Zr, and Si in the metal compound-containing substance used in the method for producing a coating structure of the present invention is more than 0 mass% and 35 mass% or less in terms of metal.

The content of the compound of at least one metal element selected from Ti, Nb, Mo, Hf, Ta, W, Zr, and Si in the metal compound-containing substance is preferably adjusted according to the type of the metal element or the carbon-based substrate, more preferably more than 0 mass% and 35 mass% or less, still more preferably 0.03 mass% or more and 25 mass% or less, particularly preferably 0.06 mass% or more and 25 mass% or less, and more particularly preferably 0.1 mass% or more and 15 mass% or less in terms of metal. When the metal compound-containing substance contains a plurality of metal elements selected from Ti, Nb, Mo, Hf, Ta, W, Zr, and Si, the total value of the mass fractions in terms of metals is preferably within the above-described numerical range. In the present description, the phrase "in terms of metal" means in terms of Ti for Ti, in terms of Nb for Nb, in terms of Mo for Mo, in terms of Hf for Hf, in terms of Ta for Ta, in terms of W for W, in terms of Zr for Zr, and in terms of Si for Si. Moreover, the metal compound-containing substance may contain a metal element other than at least one metal element selected from Ti, Nb, Mo, Hf, Ta, W, Zr, and Si, a metalloid element, and a nonmetal element. Examples thereof include B and P.

Also, the metal compound-containing substance used in the method for producing a coating structure of the present invention contains a Ta compound.

When the metal compound-containing substance contains a Ta compound, it is preferable in that carbon contained on the carbon substrate is reacted and a carbonization reaction easily proceeds. Specific examples of the Ta compound include a tantalum peroxocitrate compound, a tantalate hydroxide, and a polyoxotantalate.

When the metal compound-containing substance is a tantalum peroxocitrate compound, even if a substrate does not contain carbon, by heating a substrate coated with the tantalum peroxocitrate compound, the tantalum contained in the tantalum peroxocitrate compound reacts with carbon to form tantalum carbide.

Furthermore, when the metal compound-containing substance is a tantalate hydroxide, the tantalum concentration in the metal compound-containing substance may be typically 5 mass% or more and 30 mass% or less, 5 mass% or more and 25 mass% or less, 5 mass% or more and 20 mass% or less, 5 mass% or more and 15 mass% or less, or 5 mass% or more and 10 mass% or less.

Here, when the metal compound-containing substance is a tantalate hydroxide, the content of tantalum in the metal compound-containing substance is calculated by appropriately diluting the metal compound-containing substance with dilute hydrochloric acid as necessary, and measuring the tantalum mass fraction in terms of tantalum in accordance with JIS K0116:2014 using ICP emission spectrometry (manufactured by Agilent Technologies, Inc.: AG-5110).

In addition, the metal compound-containing substance used in the method for producing a coating structure of the present invention may contain a resin.

When the metal compound-containing substance contains a resin, it is preferable in that the resin is uniformly compatible with the metal compound and functions to adhere to the carbon substrate, thereby improving film formability and adhesion to the carbon substrate.

Examples of the resin contained in the metal compound-containing substance include polyolefin-based compounds and polyvinyl-based compounds.

Further, in the metal compound-containing substance used in the method for producing a coating structure of the present invention, the resin content may be 0.1 mass% or more and 60 mass% or less with respect to 100 mass% of the metal compound-containing substance.

When the resin content in the metal compound-containing substance of the present invention is 0.1 mass% or more and 60 mass% or less, it is preferable in that aggregation of fine metal compounds after drying can be suppressed, and wettability of the metal compound-containing substance to the carbon substrate can be improved. The resin content may be 0.15 mass% or more and 40 mass% or less, 0.2 mass% or more and 30 mass% or less, or 0.25 mass% or more and 20 mass% or less.

Furthermore, the metal compound-containing substance used in the method for producing a coating structure of the present invention may contain, as a surfactant, at least one surfactant selected from the group consisting of a nonionic surfactant, a cationic surfactant, and an anionic surfactant.

Examples of the surfactant include an olefin-based resin having an amine group, a carboxyl group, a hydroxyl group, phosphoric acid, a sulfone group, or an unsaturated fatty acid as a functional group in a side chain, an acetylene glycol-based compound, polyoxyalkylene, polyoxyethylene, and polyoxypropylene.

Also, in the metal compound-containing substance used in the method for producing a coating structure of the present invention, the content of a surfactant may be 0.001 mass% or more and 10 mass% or less with respect to 100 mass% of the metal compound-containing substance.

When the resin content in the metal compound-containing substance of the present invention is 0.001 mass% or more and 10 mass% or less, it is preferable in that the wettability of the metal compound-containing substance to the substrate can be improved. The resin content may be 0.01 mass% or more and 5 mass% or less, 0.05 mass% or more and 3 mass% or less, or 0.1 mass% or more and 1 mass% or less.

Moreover, the metal compound-containing substance used in the method for producing a coating structure of the present invention may contain a carbon material.

When the metal compound-containing substance contains a carbon material, it is preferable in that the carbon material becomes a carbonization component during carbonization and carbonization is improved.

Furthermore, the metal compound-containing substance used in the method for producing a coating structure of the present invention may be a solution, a sol, or a gel. The metal compound-containing substance may be any substance as long as it contains a metal compound, and more specifically, it is liquefied by applying a shear stress. That is, the metal compound-containing substance includes a liquid, sol, gel, or semi-solid substance in a normal state and may be any substance as long as it can be applied onto the carbon substrate. Furthermore, the gel may have a viscosity of 200 mPa s or more by a rotating cylinder method at 25°C.

Also, when the metal compound-containing substance used in the method for producing a coating structure of the present invention is a solution, it can be easily applied onto the carbon substrate, which is preferable. Furthermore, when the metal compound-containing substance used in the method for producing a coating structure of the present invention contains water as a solvent, it is preferable from the viewpoint of reducing environmental load.

In addition, the metal compound-containing substance used in the method for producing a coating structure of the present invention has a maximum value of light transmittance in a wavelength region of 500 nm to 700 nm of 70%T or more.

When the metal compound-containing substance used in the method for producing a coating structure of the present invention has a maximum value of light transmittance in the wavelength region of 500 nm to 700 nm of 70%T or more, it is preferable in that the dispersibility is high and the uniformity of components in a liquid is excellent. The maximum value of the light transmittance in the wavelength region of 500 nm to 700 nm is more preferably 72%T or more, still more preferably 74%T or more, particularly preferably 76%T or more, more particularly preferably 78%T or more, and even more particularly preferably 80%T or more. The light transmittance in the wavelength region of 500 nm to 700 nm may be 80%T. The measured value of the light transmittance may exceed 100%T due to a measurement error or the like. However, since the theoretical upper limit value is 100%T, the light transmittance is regarded as 100%T when the measured value exceeds 100%T.

Here, the light transmittance in the wavelength region of 500 nm to 700 nm is measured for the metal compound-containing substance used in the method for producing a coating structure of the present invention using a spectrophotometer according to the following light transmittance measurement conditions.

= Light transmittance measurement conditions =

- Measuring device: Ultraviolet-visible near-infrared spectrophotometer Model UH4150 (manufactured by Hitachi High-Tech Science Corporation)
- Measurement mode: Wavelength scan
- Data mode: %T (transmission)
- Measurement wavelength range: 200 nm to 2,000 nm
- Scanning speed: 600 nm/min
- Sampling interval: 2 nm

On the other hand, when the metal compound-containing substance used in the method for producing a coating structure of the present invention contains a compound of Si, the light transmittance in the wavelength region of 500 nm to 700 nm is determined by placing 3 g of a metal compound-containing substance containing a compound of Si adjusted to room temperature (25°C) in a measurement cell (optical path length: 1 cm), and measuring an ultraviolet-visible absorption spectrum (UV-Vis absorption spectrum) in accordance with JIS K 0115, 2004 "General rules for molecular absorptiometric analysis method" according to the following light transmittance measurement conditions (containing Si).

= Light transmittance measurement conditions (containing Si) =

- Measuring device: Model U-2900 spectrophotometer (manufactured by Hitachi High-Tech Corporation)
- Measurement mode: Wavelength scan
- Data mode: %T (transmission)
- Measurement wavelength range: 200 nm to 1,000 nm
- Scanning speed: 200 nm/min
- Sampling interval: 1 nm
- Cell length: 10 mm
- Measurement cell: Disposable square cell for particle diameter (manufactured by Otsuka Electronics Co., Ltd.)

Also, the metal compound-containing substance used in the method for producing a coating structure of the present invention has a particle size (D50) of particles in the metal compound-containing substance in dynamic light scattering of 3,000 nm or less.

The particle size (D50) of the particles in the metal compound-containing substance used in the method for producing a coating structure of the present invention is preferably 3,000 nm or less from the viewpoint of temporal stability, and more preferably 2,000 nm or less, and may be 1,000 nm or less, 500 nm or less, 400 nm or less, 300 nm or less, 100 nm or less, 50 nm or less, 30 nm or less, 20 nm or less, 10 nm or less, 5 nm or less, 3 nm or less, or 2 nm or less. On the other hand, the particle size (D50) is preferably 0.1 nm or more, more preferably 0.5 nm or more, still more preferably 0.7 nm or more, and particularly preferably 1 nm or more. Typically, the particle size (D50) is 0.6 nm or more and 200 nm or less.

Here, the dynamic light scattering is a method in which light scattering intensity from a group of particles moving in a Brownian motion is measured by irradiating a solution such as a suspension solution with light such as laser light, and a particle size and a distribution are obtained from a temporal variation of the intensity. Specifically, the method for evaluating the particle size distribution is performed in accordance with JIS Z 8828:2019 "Particle size analysis-dynamic light scattering" using a zeta potential/particle size/molecular weight analyzer (manufactured by Otsuka Electronics Co., Ltd.:

ELSZ-2000ZS). In addition, if necessary, 1000 times diluted with pure water is used as a measurement sample, and in order to remove dust and the like in the measurement sample immediately before measurement, the measurement sample is filtered with a filter having a pore size of 11 $\mu$m, and subjected to ultrasonic treatment for 3 minutes with an ultrasonic cleaner (manufactured by AS ONE Corporation: VS-100III). Further, the liquid temperature of the measurement sample was adjusted to 25°C. The particle size (D50) refers to a median diameter (D50) that is a particle size indicating a 50% cumulative value of a cumulative distribution curve.

In addition, the metal compound-containing substance used in the method for producing a coating structure of the present invention has a pH of 6.5 or more and 13.5 or less.

When the pH of the metal compound-containing substance used in the method for producing a coating structure of the present invention is 6.5 or more, it is preferable in that the solubility is good. The pH of the metal compound-containing substance is more preferably 7.0 or more, still more preferably 7.5 or more, and particularly preferably 8.0 or more. The pH of the metal compound-containing substance may be 8.5 or more, 9.0 or more, 9.5 or more, 10.0 or more, 10.5 or more, or 11.0 or more. On the other hand, the pH of the metal compound-containing substance is preferably 13.5 or less, more preferably 13.0 or less, and still more preferably 12.5 or less.

Here, the pH of the metal compound-containing substance used in the method for producing a coating structure of the present invention is measured after immersing an electrode (manufactured by HORIBA, Ltd.: standard ToupH electrode 9615S-10D) of a pH meter (manufactured by HORIBA, Ltd.: glass electrode-type hydrogen ion concentration indicator D-51) in the metal compound-containing substance and confirming that the liquid temperature has stabilized at 25°C.

Then, in the application step according to the method for producing a coating structure of the present invention, the metal compound-containing substance is applied onto the above-described carbon substrate by the following coating method.

Specific examples of the method for applying the metal compound-containing substance onto the carbon substrate include spray, inkjet, dispenser, nozzle coating, slit coating, die coating, roll coating, spin coating, blade coating, knife coating, wire bar coating, screen printing, and brush coating.

Next, in the heating step according to the method for producing a coating structure of the present invention, the carbon substrate coated with the metal compound-containing substance is heated to form a metal-carbon composite coating on the carbon substrate.

By heating the carbon substrate coated with the metal compound-containing substance, the metal compound-containing substance reacts with carbon contained in the carbon substrate, that is, a carbonization reaction, whereby a metal-carbon composite coating is formed on the carbon substrate.

Specifically, the carbon substrate coated with the metal compound-containing substance is placed in a stationary furnace and heated under an inert atmosphere, for example, an argon atmosphere or a nitrogen atmosphere, whereby the metal element in the metal compound-containing substance reacts with carbon present on the coated surface of the carbon substrate coated with the metal compound-containing substance (carbonization reaction) to form a metal carbide, and a metal-carbon composite coating can be formed on the carbon substrate. Also, the heating step may be performed under reduced pressure or under vacuum. Here, the heating temperature in the heating step is preferably 1000°C or higher and 3500°C or lower, and the heating time is preferably 0.5 hours or more and 2 hours or less.

Further, when the metal compound-containing substance is a peroxo complex metal compound, by heating the carbon substrate coated with the peroxo complex metal compound, the metal element contained in the peroxo complex metal compound reacts with carbon to form a metal carbide, and a metal-carbon composite coating can be formed on the carbon substrate.

When the heating temperature in the heating step is 1000°C or higher and 3500°C or lower, it is preferable in that carbon of the carbon substrate and the metal compound reliably react with each other. The heating temperature in the heating step is more preferably 1400°C or higher and 2000°C or lower, still more preferably 1500°C or higher and 1900°C or lower, and particularly preferably 1550°C or higher and 1800°C or lower.

When the heating time in the heating step is 0.5 hours or more and 2 hours or less, it is preferable in that the carbide is sufficiently synthesized. The heating time in the heating step is more preferably 1 hour or more and 1.5 hours or less, and still more preferably 1.2 hours or more and 1.4 hours or less.

In addition, the method for producing a coating structure of the present invention may further include a drying step between the application step and the heating step of the method for producing a coating structure of the present invention described above.

It is preferable in that the carbon substrate coated with the metal compound-containing substance is placed in a stationary furnace and dried at a drying temperature of 100°C for 1 hour in that excessive impurities such as moisture can be removed.

The drying temperature in the drying step is more preferably 110°C or higher and 400°C or lower, still more preferably 120°C or higher and 300°C or lower, and particularly preferably 130°C or higher and 200°C or lower.

The drying time in the drying step is preferably 0.2 hours or more and 3 hours or less, more preferably 0.3 hours or more and 2 hours or less, and still more preferably 0.4 hours or more and 1 hour or less.

Furthermore, the method for producing a coating structure of the present invention may include a step of cooling the metal-carbon composite coating formed by the heating step.

The metal-carbon composite coating formed by the heating step may be cooled to room temperature.

Specifically, the coating structure having the metal-carbon composite coating formed on the carbon substrate is taken out from the stationary furnace and cooled to room temperature.

By the method for producing a coating structure of the present invention described above, a coating structure having a metal-carbon composite coating formed on the carbon substrate can be produced.

The method for producing a coating structure of the present invention is not limited to the above-described production method, and may be the following production method.

The method for producing a coating structure of the present invention is a method for producing a coating structure having a metal-carbon composite coating on a carbon substrate, the method including an immersion step of immersing the carbon substrate in a metal compound-containing substance, and a heating step of heating the immersed carbon substrate to form a metal-carbon composite coating on the carbon substrate.

The carbon substrate and the metal compound-containing substance used in the method for producing a coating structure of the present invention are the same as the carbon substrate and the metal compound-containing substance used in the method for producing a coating structure of the present invention described above, and thus a detailed description thereof will be omitted.

First, in the immersion step according to the method for producing a coating structure of the present invention, the carbon substrate is immersed in the metal compound-containing substance.

Specifically, the carbon substrate is impregnated with the metal compound-containing substance by immersing the carbon substrate in a container filled with the metal compound-containing substance. Also, the immersion time in the immersion step is preferably 0.1 hours or more and 1 hour or less, and more preferably 0.2 hours or more and 0.9 hours or less. The immersion step may be performed at room temperature or may be heated and then cooled to room temperature.

Moreover, in the immersion step according to the method for producing a coating structure of the present invention, when the metal compound-containing substance is immersed in the carbon substrate under reduced pressure or vacuum, it is preferable in that the carbon substrate is easily impregnated with the metal compound-containing substance, and the immersion time in the immersion step can be shortened.

Specifically, a container filled with the metal compound-containing substance in which the carbon substrate is immersed is placed in a decompression device, and the carbon substrate is more easily impregnated with the metal compound-containing substance by making the inside of the container under reduced pressure or vacuum.

The degree of vacuum in the decompression device is preferably 0.05 MPa or less, more preferably 0.04 MPa or less, still more preferably 0.03 MPa or less, and particularly preferably 0.02 MPa or less. In addition, the immersion time in the immersion step under reduced pressure or vacuum is preferably 0.1 hours or more and 0.5 hours or less, and more preferably 0.2 hours or more and 0.4 hours or less.

Further, when the metal-carbon composite coating is formed on one surface, for example, only the surface of the carbon substrate, only the surface of the carbon substrate is immersed in the metal compound-containing substance. On the other hand, when the metal-carbon composite coating is formed on the entire peripheral surface of the carbon substrate, the entire peripheral surface of the carbon substrate is immersed in the metal compound-containing substance.

Next, in the heating step according to the method for producing a coating structure of the present invention, the carbon substrate impregnated with the metal compound-containing substance is heated to form a metal-carbon composite coating on the carbon substrate.

By heating the carbon substrate impregnated with the metal compound-containing substance, the metal element in the metal compound-containing substance reacts with carbon present in the carbon substrate impregnated with the metal compound-containing substance (carbonization reaction) to form a metal carbide, and a metal-carbon composite coating is formed on the carbon substrate.

Here, when the metal compound-containing substance is a peroxocitrate metal compound, by heating a carbon substrate impregnated with the peroxocitrate metal compound, the metal element contained in the peroxocitrate metal compound reacts with carbon to form a metal carbide, and a metal-carbon composite coating can be formed on the carbon substrate.

In the heating step according to the method for producing a coating structure of the present invention, the heating temperature is 1000°C or higher and 3500°C or lower, and the heating time is 0.5 hours or more and 2 hours or less.

When the heating temperature in the heating step is 1000°C or higher and 3500°C or lower, it is preferable in that carbon of the carbon substrate and the metal compound reliably react with each other. The heating temperature in the heating step is more preferably 1400°C or higher and 2000°C or lower, still more preferably 1500°C or higher and 1900°C or lower, and particularly preferably 1550°C or higher and 1800°C or lower.

When the heating time in the heating step is 0.5 hours or more and 2 hours or less, it is preferable in that the carbide is sufficiently synthesized. The heating time in the heating step is more preferably 1 hour or more and 1.5 hours or less, and still more preferably 1.2 hours or more and 1.4 hours or less.

Also, the method for producing a coating structure of the present invention may further include a drying step between the immersion step and the heating step of the method for producing a coating structure of the present invention described above.

It is preferable that the carbon substrate impregnated with the metal compound-containing substance is placed in a stationary furnace and dried at a drying temperature of 100°C for 1 hour in that excessive impurities such as moisture can be removed.

The drying temperature in the drying step is more preferably 110°C or higher and 400°C or lower, still more preferably 120°C or higher and 300°C or lower, and particularly preferably 130°C or higher and 200°C or lower.

The drying time in the drying step is preferably 0.2 hours or more and 3 hours or less, more preferably 0.3 hours or more and 2 hours or less, and still more preferably 0.4 hours or more and 1 hour or less.

Furthermore, the method for producing a coating structure of the present invention may include a step of cooling the metal-carbon composite coating formed by the heating step.

The metal-carbon composite coating formed by the heating step may be cooled to room temperature.

The metal-carbon composite coating formed on the carbon substrate produced by the method for producing a coating structure of the present invention described above may be in a state in which the metal element and carbon are present, and the content of the metal element is preferably more than 0 mass% and 80 mass% or less, and the content of carbon is preferably more than 0 mass% and 50 mass% or less. The mass fraction of the metal element and carbon in the metal-carbon composite coating can be measured, for example, by semi-quantitative analysis using energy dispersive X-ray analysis (EDX) or the like of a metal-carbon composite coating portion in a substrate cross-sectional sample.

In addition, while the metal element in the metal-carbon composite coating is more present on the surface of the coating, the closer to the carbon substrate, the more the proportion of carbon derived from the carbon substrate. In the case where the metal compound-containing substance is applied, the metal element is likely to be present on the surface of the metal-carbon composite coating. On the other hand, in the case where the metal-compound-containing substance is impregnated, the proportion of the metal element inside the metal-carbon composite coating is relatively large as compared with the case where the metal compound-containing substance is applied.

Also, the metal-carbon composite coating formed on the produced carbon substrate by the method for producing a coating structure of the present invention can be confirmed to be a carbide from peaks of an X-ray diffraction pattern obtained by performing X-ray diffraction measurement according to the following X-ray diffraction measurement conditions and X-ray diffraction analysis conditions.

= X-ray diffraction measurement conditions =

- Device: MiniFlexII (manufactured by Rigaku Corporation)
- Measurement range ($2\theta$): 5 to 90°
- Sampling width: 0.02°
- Scanning speed: 2.0°/min
- X-ray: CuK$\alpha$ ray
- Voltage: 30 kV
- Current: 15 mA
- Divergence slit: 1.25°
- Scattering slit: 1.25°
- Light receiving slit: 0.3 mm

= X-ray diffraction analysis conditions =

- Data analysis software PDXL2 manufactured by Rigaku Corporation is used.
- In order to define the peak top, the peak is smoothed by b-spline.

Furthermore, when the coating thickness of the metal-carbon composite coating formed on the produced carbon substrate by the method for producing a coating structure of the present invention is 300 nm or less, it is preferable in that cracks in the coating and peeling of the coating itself hardly occur. The metal-carbon composite coating may have a coating thickness of 100 nm or less. This is because when cracks are generated in the metal-carbon composite coating, the carbon substrate is oxidized and easily released as carbon dioxide, and carbon in the carbon substrate easily decreases. On the other hand, when the coating thickness of the metal-carbon composite coating is 1 nm or more, it is preferable in that the carbon substrate can be sufficiently protected. The coating thickness of the metal-carbon composite coating may be 10 nm or more.

In addition, the coating structure of the present invention is a coating structure in which a metal-carbon composite coating is formed on a carbon substrate, and the metal-carbon composite coating is formed by heating the carbon substrate coated or impregnated with a metal compound-containing substance.

The coating structure of the present invention has a metal-carbon composite coating formed on a carbon substrate regardless of the size and shape of the carbon substrate, whereby heat resistance and reaction resistance can be improved, and the life of the carbon substrate can be extended. The coating structure of the present invention also has a metal-carbon composite coating having a uniform coating thickness on a carbon substrate regardless of the size and shape of the carbon substrate.

Furthermore, in the coating structure of the present invention, when the coating thickness of the metal-carbon composite coating formed on the carbon substrate is 300 nm or less, it is preferable in that cracks in the coating and peeling of the coating itself hardly occur.

Moreover, the metal compound-containing substance for a metal-carbon composite coating of the present invention is a metal compound-containing substance for a metal-carbon composite coating formed on a carbon substrate, and reacts with the carbon substrate to form a metal-carbon composite coating.

The metal compound-containing substance for a metal-carbon composite coating of the present invention is applied to or immersed in a carbon substrate, and the carbon substrate is heated, whereby the metal element in the metal compound-containing substance reacts with carbon present on the coated surface of the carbon substrate coated with the metal compound-containing substance (carbonization reaction) to form a metal carbide, and a metal-carbon composite coating can be formed.

By forming the metal-carbon composite coating on the carbon substrate, corrosion resistance to the following liquid and gas can be improved. Specific examples thereof include hydrochloric acid, sulfuric acid, nitric acid, phosphoric acid, hydrofluoric acid, sodium chloride, acetic acid, oxalic acid, ammonia water, sodium hydroxide, potassium hydroxide, water vapor, hydrogen sulfide gas, ammonia gas, hydrogen gas, fluorine gas, chlorine gas, nitrogen oxide gas (NOx), and sulfur oxide gas (SOx).

In addition, examples of the metal compound-containing substance for a metal-carbon composite coating of the present invention include those containing a compound of at least one metal element selected from Ti, Nb, Mo, Hf, Ta, W, Zr, and Si. Specific examples thereof include a peroxo complex metal compound containing at least one metal element selected from Ti, Nb, Mo, Hf, Ta, W, Zr, and Si (for example, a peroxohydroxy acid complex metal compound, a peroxocitrate complex metal compound, or a peroxoammonium complex metal compound), a metal hydroxide, a hydroxy acid complex metal compound (for example, an ammonium oxalate complex metal compound), and a polyacid, but are not limited to these compounds. Moreover, the metal compound-containing substance may contain a metal element other than at least one metal element selected from Ti, Nb, Mo, Hf, Ta, W, Zr, and Si, a metalloid element, and a nonmetal element. Examples thereof include B and P.

When the metal compound-containing substance for a metal-carbon composite coating of the present invention is a peroxo complex metal compound, even if a substrate does not contain carbon, by heating a substrate coated with the peroxo complex metal compound, the metal element contained in the peroxo complex metal compound reacts with carbon to form a metal carbide. Also, when the metal compound-containing substance is a hydroxy acid complex metal compound, the metal element contained in the hydroxy acid complex metal compound reacts with carbon in the same manner to form a metal carbide.

Furthermore, when the metal compound-containing substance for a metal-carbon composite coating of the present invention contains a Ta compound, it is preferable in that carbon contained on the carbon substrate is reacted and a carbonization reaction easily proceeds. Specific examples of the Ta compound include a tantalum peroxocitrate compound, a tantalate hydroxide, and a polyoxotantalate.

When the metal compound-containing substance for a metal-carbon composite coating of the present invention is a tantalum peroxocitrate compound, even if a substrate does not contain carbon, by heating a substrate coated with the tantalum peroxocitrate compound, the tantalum contained in the tantalum peroxocitrate compound reacts with carbon to form tantalum carbide.

In addition, when the metal compound-containing substance for a metal-carbon composite coating of the present invention contains a resin, it is preferable in that the resin is uniformly compatible with the metal compound and functions to adhere to the carbon substrate, thereby improving film formability and adhesion to the carbon substrate. Specific examples of the resin contained in the metal compound-containing substance include polyolefin-based compounds and polyvinyl-based compounds.

Further, the metal compound-containing substance for a metal-carbon composite coating of the present invention may be a solution, a sol, or a gel. The metal compound-containing substance may be any substance as long as it contains a metal compound, and more specifically, it is liquefied by applying a shear stress. That is, the metal compound-containing substance includes a liquid, sol, gel, or semi-solid substance in a normal state and may be any substance as long as it can be applied onto the carbon substrate.

Also, when the metal compound-containing substance for a metal-carbon composite coating of the present invention is a solution, it can be easily applied onto the carbon substrate, which is preferable. Furthermore, when the metal compound-containing substance for a metal-carbon composite coating of the present invention contains water as a solvent, it is preferable from the viewpoint of reducing environmental load.

In addition, when the metal compound-containing substance for a metal-carbon composite coating of the present invention has a maximum value of light transmittance in a wavelength range of 500 nm to 700 nm of 70%T or more, it is preferable in that the dispersibility is high and the uniformity of components in a liquid is excellent. The maximum value of the light transmittance in the wavelength region of 500 nm to 700 nm is more preferably 72%T or more, still more preferably 74%T or more, particularly preferably 76%T or more, more particularly preferably 78%T or more, and even more particularly preferably 80%T or more. The light transmittance in the wavelength region of 500 nm to 700 nm may be 80%T.

Further, in the metal compound-containing substance for a metal-carbon composite coating of the present invention, the particle size (D50) of the particles in the metal compound-containing substance in dynamic light scattering is preferably 3,000 nm or less from the viewpoint of temporal stability, and is more preferably 2,000 nm or less, and may be 1,000 nm or less, 500 nm or less, 400 nm or less, or 300 nm or less. On the other hand, the particle size (D50) is preferably 0.1 nm or more, more preferably 0.5 nm or more, still more preferably 0.7 nm or more, and particularly preferably 1 nm or more. Typically, the particle size (D50) is 0.6 nm or more and 200 nm or less.

Furthermore, when the pH of the metal compound-containing substance for a metal-carbon composite coating of the present invention is 6.5 or more, it is preferable in that the solubility is good. The pH of the metal compound-containing substance is more preferably 7.0 or more, still more preferably 7.5 or more, and particularly preferably 8.0 or more. The pH of the metal compound-containing substance may be 8.5 or more, 9.0 or more, 9.5 or more, 10.0 or more, 10.5 or more, or 11.0 or more. On the other hand, the pH of the metal compound-containing substance is preferably 13.5 or less, more preferably 13.0 or less, and still more preferably 12.5 or less.

Moreover, the metal compound-containing substance for a metal-carbon composite coating of the present invention may contain components other than the components derived from the metal compound (referred to as "other components".) as long as the action and effect thereof are not inhibited. Examples of other components include Li, Mg, Si, Ca, Ti, Mn, Ni, Cu, Zn, Sr, Zr, Mo, Ba, W, Bi, and B. However, the present invention is not limited thereto. The content of other components in the metal compound-containing substance is preferably less than 5 mass%, more preferably less than 4 mass%, and still more preferably less than 3 mass%. Incidentally, the metal compound-containing substance is assumed to unintentionally contain inevitable impurities. The content of the inevitable impurities is preferably less than 0.01 mass%.

Note that the expression "X to Y" (X and Y are arbitrary numbers) in the present description also includes the meaning of "preferably more than X" or "preferably less than Y" as well as the meaning of "X or more and Y or less" unless otherwise stated. In addition, the expression "X or more" (X is an arbitrary number) or "Y or less" (Y is an arbitrary number) also includes the intention of "preferably more than X" or "preferably less than Y".

Advantageous Effects of Invention

The method for producing a coating structure of the present invention can produce a coating structure having a uniform metal-carbon composite coating on a carbon substrate regardless of the size and shape of the substrate.

Brief Description of Drawings

Fig. 1 is a list of physical property values of coating structures according to Examples 1 to 10 of the present invention, carbon substrates according to Comparative Examples 1, 3, and 4, and a coating structure according to Comparative Example 2.

Fig. 2 is a list of physical property values of coating structures according to Examples 11 to 17 of the present invention and carbon substrates according to Comparative Examples 5 and 6.

Fig. 3 is a list of physical property values of coating structures according to Examples 18 and 19 of the present invention and a carbon substrate according to Comparative Example 7.

Description of Embodiments

Hereinafter, the coating structure of the embodiment according to the present invention will be further described with reference to the following examples. However, the following examples do not limit the present invention.

(Example 1)

A tantalum peroxocitrate solution was applied to the entire surface of a carbon substrate (longitudinal dimension × lateral dimension × thickness dimension: 50 mm × 50 mm × 3 mm) using a brush (the coating amount was 0.0075 g). Next, the carbon substrate coated with the tantalum peroxocitrate solution was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 1 was obtained by cooling to room temperature.

The tantalum peroxocitrate solution used in Example 1 was obtained as follows.

200 g of tantalum hydroxide and 92 g of 25 mass% ammonia water were stirred and mixed for 10 minutes to obtain a first mixed solution. Thereafter, 220 g of 35 mass% hydrogen peroxide water was further added to the first mixed solution, and the mixture was stirred for 10 minutes to obtain a second mixed solution. Then, 79 g of citric acid was added to the second mixed solution, and the mixture was stirred for 10 minutes to obtain the tantalum peroxocitrate solution used in Example 1. Here, the tantalum concentration of the tantalum peroxocitrate solution used in Example 1 was 18% in terms of $Ta_2O_5$ and 14.3% in terms of Ta.

The tantalum peroxocitrate solution used in Example 1 was a clear solution without precipitation immediately after the production, and was a clear solution without precipitation even after 7 days from the production. In addition, the concentration of the tantalum peroxocitrate solution used in Example 1 after 7 days from the production in terms of $Ta_2O_5$ was 175 g/L. Furthermore, the average particle size of the tantalum peroxocitrate solution used in Example 1 after 7 days from the production by dynamic light scattering was 625.2 nm.

On the other hand, as the carbon substrate used in Example 1, an extruded carbon substrate (graphite flat plate extruded material manufactured by Tokyo Tanso Co. Ltd.) was used. Note that the carbon substrate is not limited to the extruded carbon substrate.

(Example 2)

A tantalum peroxocitrate solution was applied to the entire surface of a carbon substrate (longitudinal dimension × lateral dimension × thickness dimension: 50 mm × 50 mm × 3 mm) using a brush. Next, the carbon substrate coated with the tantalum peroxocitrate solution was placed in an electric furnace and dried in the electric furnace heated to 110°C for 10 minutes. The step of applying the tantalum peroxocitrate solution again to the entire surface of the dried carbon substrate using a brush, and then drying the tantalum peroxocitrate solution in an electric furnace heated to 110°C for 10 minutes was repeated twice. That is, the step of applying a tantalum peroxocitrate solution to the carbon substrate and drying the tantalum peroxocitrate solution was repeated three times in total (the total coating amount of all three times was 0.0225 g). Thereafter, the carbon substrate was heated in the electric furnace heated to 1500°C for 1 hour under an Ar atmosphere. Then, the coating structure according to Example 2 was obtained by cooling to room temperature.

The tantalum peroxocitrate solution used in Example 2 is the same as the tantalum peroxocitrate solution used in Example 1, and thus a detailed description thereof will be omitted. Also, the carbon substrate used in Example 2 is the same as the carbon substrate used in Example 1, and thus a detailed description thereof will be omitted.

(Example 3)

A tantalate aqueous solution (containing a resin) was applied to the entire surface of a carbon substrate (longitudinal dimension × lateral dimension × thickness dimension: 50 mm × 50 mm × 3 mm) using a brush (the coating amount was 0.0075 g). Next, the carbon substrate coated with the tantalate aqueous solution (containing a resin) was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 3 was obtained by cooling to room temperature.

The tantalate aqueous solution (containing a resin) used in Example 3 was obtained as follows.

In 120 g of a 55 mass% aqueous hydrofluoric acid solution, 137.9 g of tantalum hydroxide ($Ta_2O_5$ concentration: 66 mass%) manufactured by MITSUI MINING & SMELTING CO., LTD. was dissolved, and 849 mL of ion-exchanged water was added thereto to obtain a tantalum fluoride aqueous solution ($Ta_2O_5$ concentration: 8.2 mass%).

To 1,000 g of this tantalum fluoride aqueous solution, 27.5 g of hydrogen peroxide water ($H_2O_2$ concentration: 35 mass%) was added ($H_2O_2$/Ta molar ratio = 0.76), and the mixture was stirred for 5 minutes to obtain a tantalum compound aqueous solution.

1,000 g of this tantalum compound aqueous solution was added to 6.82 L of ammonia water ($NH_3$ concentration: 25 mass%) in a time shorter than 10 minutes ($NH_3$/Ta molar ratio = 245, $NH_3$/HF molar ratio = 30.7) to obtain a reaction liquid (pH 11). This reaction liquid was a slurry of a tantalate compound hydrate, in other words, a slurry of a tantalum-containing precipitate.

Next, this reaction liquid was decanted using a centrifuge and washed until the amount of released fluoride ions reached 100 mg/L or less to obtain a tantalum-containing precipitate from which the fluoride ions had been removed. At this time, ammonia water was used as a washing liquid.

Further, the tantalum-containing precipitate from which the fluoride ions had been removed was diluted with pure water to obtain a tantalum-containing precipitation slurry. A part of the tantalum-containing precipitation slurry was dried at 110°C for 24 hours and then fired at 1,000°C for 4 hours to generate $Ta_2O_5$, and the concentration of $Ta_2O_5$ contained in the tantalum-containing precipitation slurry was calculated from the weight thereof.

Thereafter, the tantalum-containing precipitation slurry diluted with pure water, 5 mass% of dimethylamine as an organic nitrogen compound, and pure water were mixed so that the tantalum concentration of the final mixture was 5 mass% in terms of $Ta_2O_5$ and the weight ratio of $Ta_2O_5$/organic nitrogen compound was 1.0 to obtain a tantalate aqueous solution. The pH of the tantalate aqueous solution was 12.0.

Then, to the obtained tantalate aqueous solution, a polyolefin-based polymer copolymer neutralized salt (ZAIKTHENE A manufactured by Sumitomo Seika Chemicals Company, Limited.) was added, and the mixture was stirred at 25°C for 30 minutes to obtain the tantalate aqueous solution (containing a resin) used in Example 3. Here, the tantalum concentration of the tantalate aqueous solution (containing a resin) used in Example 3 was 5% in terms of $Ta_2O_5$ and 4.1% in terms of Ta. The content of the resin component contained in the tantalate aqueous solution (containing a resin) used in Example 3 was 0.025 mass% with respect to 100 mass% of the tantalate aqueous solution.

Here, the added polyolefin-based polymer copolymer neutralized salt is weighed so that the content of the resin component is 25 mass%, the content of ammonia water is less than 1 mass%, and the balance is pure water with respect to 100 mass% of the polyolefin-based polymer copolymer neutralized salt.

On the other hand, the carbon substrate used in Example 3 is the same as the carbon substrate used in Example 1, and thus a detailed description thereof will be omitted.

(Example 4)

A tantalate aqueous solution (containing a resin) was applied to the entire surface of a carbon substrate (longitudinal dimension × lateral dimension × thickness dimension: 50 mm × 50 mm × 3 mm) using a brush. Next, the carbon substrate coated with the tantalate aqueous solution (containing a resin) was placed in an electric furnace and dried in the electric furnace heated to 110°C for 10 minutes. The step of applying the tantalate aqueous solution (containing a resin) again to the entire surface of the dried carbon substrate using a brush, and then drying the tantalate aqueous solution in an electric furnace heated to 110°C for 10 minutes was repeated twice. That is, the step of applying a tantalate aqueous solution (containing a resin) to the carbon substrate and drying the tantalate aqueous solution was repeated three times in total (the total coating amount of all three times was 0.0225 g). Thereafter, the carbon substrate was heated in the electric furnace heated to 1500°C for 1 hour under an Ar atmosphere. Then, the coating structure according to Example 4 was obtained by cooling to room temperature.

In addition, the tantalate aqueous solution (containing a resin) used in Example 4 is the same as the tantalate aqueous solution (containing a resin) used in Example 3, and thus a detailed description thereof will be omitted.

On the other hand, the carbon substrate used in Example 4 is the same as the carbon substrate used in Example 1, and thus a detailed description thereof will be omitted.

(Example 5)

A tantalate compound-containing liquid was applied to the entire surface of a carbon substrate (longitudinal dimension × lateral dimension × thickness dimension: 50 mm × 50 mm × 3 mm) using a brush (the coating amount was 0.0075 g). Next, the carbon substrate coated with the tantalate compound-containing liquid was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 5 was obtained by cooling to room temperature.

The tantalate compound-containing liquid used in Example 5 was obtained as follows.

In 100 g of a 55 mass% aqueous hydrofluoric acid solution, 100 g of tantalum hydroxide ($Ta_2O_5$ concentration: 99.9 mass%) manufactured by MITSUI MINING & SMELTING CO., LTD. was dissolved, and 100 mL of ion-exchanged water was added thereto to obtain a tantalum fluoride aqueous solution ($Ta_2O_5$ concentration: 33.3 mass%).

To 100 g of the tantalum fluoride aqueous solution, 1000 mL of ammonia water ($NH_3$ concentration: 25 mass%) was added to obtain a fluorine-containing tantalum hydrate cake.

Next, this fluorine-containing tantalum hydrate cake was decanted with diluted ammonia water using a centrifuge and washed until the amount of released fluoride ions reached 100 mg/L or less to obtain a tantalum-containing precipitate from which the fluoride ions had been removed. At this time, ammonia water was used as a washing liquid.

Here, regarding the tantalum concentration of the obtained tantalum-containing precipitate, a part of the tantalum-containing precipitate is collected, dried at 110°C for 24 hours, and then fired at 1000°C for 4 hours to generate $Ta_2O_5$. The weight of $Ta_2O_5$ thus generated was measured, and the concentration of $Ta_2O_5$ (tantalum oxide, in terms of oxide) in the tantalum-containing precipitate calculated from the weight thereof was 50 mass%. In addition, the Ta (tantalum, in terms of metal) concentration of the tantalum-containing precipitate was calculated to be 40.9 mass%.

Then, 50 g of 10 mass% triethylamine and 317 g of pure water were added to the obtained tantalum-containing precipitate, and the mixture was stirred for 10 minutes to obtain a tantalum-containing mixed solution. Thereafter, 83 g of 35 mass% hydrogen peroxide was added to the tantalum-containing mixed solution so that the final tantalum concentration was 5 mass% in terms of oxide (in terms of $Ta_2O_5$), 4.1 mass% in terms of metal (in terms of Ta), and the final hydrogen peroxide concentration was 6.8 mass%, and the mixture was stirred for 30 minutes to obtain the tantalate compound-containing liquid used in Example 5. Here, the tantalum concentration of the tantalate compound-containing liquid used in Example 5 was 5% in terms of $Ta_2O_5$ and 4.1% in terms of Ta. No deposit or precipitate was observed in the tantalate compound-containing liquid used in Example 5. The pH of the tantalate compound-containing liquid used in Example 5 was 11.0.

On the other hand, the carbon substrate used in Example 5 is the same as the carbon substrate used in Example 1, and thus a detailed description thereof will be omitted.

(Example 6)

The tantalate compound-containing liquid (containing a resin) was applied to the entire surface of a carbon substrate (longitudinal dimension $\times$ lateral dimension $\times$ thickness dimension: 50 mm $\times$ 50 mm $\times$ 3 mm) using a brush (the coating amount was 0.0075 g). Next, the carbon substrate coated with the tantalate compound-containing liquid (containing a resin) was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 6 was obtained by cooling to room temperature.

For the tantalate compound-containing liquid (containing a resin) used in Example 6, a polyolefin-based polymer copolymer neutralized salt (ZAIKTHENE A manufactured by Sumitomo Seika Chemicals Company, Limited.) was added to the tantalate compound-containing liquid used in Example 5, and the mixture was stirred at 25°C for 30 minutes to obtain the tantalate compound-containing liquid (containing a resin) used in Example 6. Here, the tantalum concentration of the tantalate compound-containing liquid (containing a resin) used in Example 6 was 5% in terms of $Ta_2O_5$ and 4.1% in terms of Ta. The content of the resin component contained in the tantalate compound-containing liquid (containing a resin) used in Example 6 was 0.025 mass% with respect to 100 mass% of the tantalate compound-containing liquid (containing a resin).

The polyolefin-based polymer copolymer neutralized salt added in Example 6 is the same as the polyolefin-based polymer copolymer neutralized salt used in Example 3, and thus a detailed description thereof will be omitted.

On the other hand, the carbon substrate used in Example 6 is the same as the carbon substrate used in Example 1, and thus a detailed description thereof will be omitted.

(Example 7)

In Example 7, a coating structure according to Example 7 was obtained by performing the same production method as in Example 1 except that the carbon substrate (longitudinal dimension $\times$ lateral dimension $\times$ thickness dimension: 25 mm $\times$ 25 mm $\times$ 3 mm) was used, and the tantalum concentration of the tantalum peroxocitrate solution used in Example 7 was 1% in terms of $Ta_2O_5$ and adjusted to 0.8% in terms of Ta. The coating amount of the tantalum peroxocitrate solution used in Example 7 was 0.054 g.

(Example 8)

In Example 8, a coating structure according to Example 8 was obtained by performing the same production method as in Example 1 except that the carbon substrate (longitudinal dimension $\times$ lateral dimension $\times$ thickness dimension: 25 mm $\times$ 25 mm $\times$ 3 mm) was used, and the tantalum concentration of the tantalum peroxocitrate solution used in Example 8 was 5% in terms of $Ta_2O_5$ and adjusted to 4.1% in terms of Ta. The coating amount of the tantalum peroxocitrate solution used in Example 8 was 0.113 g.

(Example 9)

In Example 9, a coating structure according to Example 9 was obtained by performing the same production method as in Example 1 except that the carbon substrate (longitudinal dimension $\times$ lateral dimension $\times$ thickness dimension: 25 mm $\times$ 25 mm $\times$ 3 mm) was used, and the tantalum concentration of the tantalum peroxocitrate solution used in Example 9 was 20% in terms of $Ta_2O_5$ and adjusted to 16.4% in terms of Ta. The coating amount of the tantalum peroxocitrate solution used in Example 9 was 0.174 g.

(Example 10)

In Example 10, a coating structure according to Example 10 was obtained by performing the same production method as in Example 1 except that the carbon substrate (longitudinal dimension × lateral dimension × thickness dimension: 25 mm × 25 mm × 3 mm) was used, the carbon substrate was a CIP material (graphite flat plate CIP material manufactured by Tokyo Carbon Industry Co., Ltd.), and the tantalum concentration of the tantalum peroxocitrate solution used in Example 10 was 20% in terms of $Ta_2O_5$ and adjusted to 16.4% in terms of Ta. The coating amount of the tantalum peroxocitrate solution used in Example 10 was 0.2 g.

(Example 11)

A tantalate aqueous solution (containing a resin) was applied to the entire surface of a carbon substrate (longitudinal dimension × lateral dimension × thickness dimension: 25 mm × 25 mm × 10 mm) using a brush (the coating amount was 3.04 g). Next, the carbon substrate coated with the tantalate aqueous solution (containing a resin) was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 11 was obtained by cooling to room temperature.

The tantalate aqueous solution (containing a resin) used in Example 11 was obtained by performing the same production method as in Example 3 except that the tantalum concentration of the tantalate aqueous solution (containing a resin) used in Example 11 was 1% in terms of $Ta_2O_5$ and adjusted to 0.8% in terms of Ta.

The polyolefin-based polymer copolymer neutralized salt added in Example 11 is the same as the polyolefin-based polymer copolymer neutralized salt used in Example 3, and thus a detailed description thereof will be omitted.

On the other hand, the carbon substrate used in Example 11 was a heat insulating material (KRECA felt G F-210 manufactured by Kureha Corporation).

(Example 12)

A tantalum peroxocitrate solution (containing a surfactant) was applied to the entire surface of a carbon substrate (longitudinal dimension × lateral dimension × thickness dimension: 25 mm × 25 mm × 10 mm) using a brush (the coating amount was 1.99 g). Next, the carbon substrate coated with the tantalum peroxocitrate solution (containing a surfactant) was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 12 was obtained by cooling to room temperature.

The tantalum peroxocitrate solution (containing a surfactant) used in Example 12 was obtained as follows.

200 g of tantalum hydroxide and 92 g of 25 mass% ammonia water were stirred and mixed for 10 minutes to obtain a first mixed solution. Thereafter, 220 g of 35 mass% hydrogen peroxide water was further added to the first mixed solution, and the mixture was stirred for 10 minutes to obtain a second mixed solution. Then, 79 g of citric acid was added to the second mixed solution, and the mixture was stirred for 10 minutes to obtain a tantalum peroxocitrate solution.

Then, a surfactant was added to the obtained tantalum peroxocitrate solution, and the mixture was stirred at 25°C for 30 minutes to obtain the tantalum peroxocitrate solution (containing a surfactant) used in Example 12. Here, the tantalum concentration of the tantalum peroxocitrate solution (containing a surfactant) used in Example 12 was 1% in terms of $Ta_2O_5$ and 0.8% in terms of Ta. The content of the surfactant contained in the tantalum peroxocitrate solution (containing a surfactant) used in Example 12 was 0.025 mass% with respect to 100 mass% of the tantalum peroxocitrate solution.

Here, the added surfactant is a polyoxyethylene-added acetylene glycol-based surfactant.

On the other hand, the carbon substrate used in Example 12 is the same as the carbon substrate used in Example 11, and thus a detailed description thereof will be omitted.

(Example 13)

A tantalum peroxocitrate solution (containing a surfactant) was applied to the entire surface of a carbon substrate (longitudinal dimension × lateral dimension × thickness dimension: 25 mm × 25 mm × 10 mm) using a brush (the coating amount was 2.22 g). Next, the carbon substrate coated with the tantalum peroxocitrate solution (containing a surfactant) was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 13 was obtained by cooling to room temperature.

The tantalum peroxocitrate solution (containing a surfactant) used in Example 13 was obtained by performing the same production method as in Example 12 except that the tantalum concentration of the tantalum peroxocitrate solution (containing a surfactant) used in Example 13 was 5% in terms of $Ta_2O_5$ and adjusted to 4.1% in terms of Ta.

Also, the surfactant used in Example 13 is the same as the surfactant used in Example 12, and thus a detailed description thereof will be omitted.

On the other hand, the carbon substrate used in Example 13 is the same as the carbon substrate used in Example 11, and thus a detailed description thereof will be omitted.

(Example 14)

A tantalum peroxocitrate solution (containing a surfactant) was applied to the entire surface of a carbon substrate (longitudinal dimension × lateral dimension: 50 mm × 50 mm) using a brush (the coating amount was 0.44 g). Next, the carbon substrate coated with the tantalum peroxocitrate solution (containing a surfactant) was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 14 was obtained by cooling to room temperature.

The tantalum peroxocitrate solution (containing a surfactant) used in Example 14 was obtained by performing the same production method as in Example 12 except that the tantalum concentration of the tantalum peroxocitrate solution (containing a surfactant) used in Example 14 was 5% in terms of $Ta_2O_5$ and adjusted to 4.1% in terms of Ta.

Also, the surfactant used in Example 14 is the same as the surfactant used in Example 12, and thus a detailed description thereof will be omitted.

On the other hand, the carbon substrate used in Example 14 was a cloth (MUTEKI carbon cloth carbon (carbon fiber) manufactured by MUGE).

(Example 15)

A tantalum peroxocitrate solution was applied to the entire surface of a carbon substrate (longitudinal dimension × lateral dimension: 50 mm × 50 mm) using a brush (the coating amount was 0.34 g). Next, the carbon substrate coated with the tantalum peroxocitrate solution was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 15 was obtained by cooling to room temperature.

The tantalum peroxocitrate solution used in Example 15 is the same as the tantalum peroxocitrate solution used in Example 8, and thus a detailed description thereof will be omitted.

On the other hand, the carbon substrate used in Example 15 is the same as the carbon substrate used in Example 14, and thus a detailed description thereof will be omitted.

(Example 16)

A tantalum peroxocitrate solution was applied to the entire surface of a carbon substrate (longitudinal dimension × lateral dimension: 50 mm × 50 mm) using a brush (the coating amount was 0.75 g). Next, the carbon substrate coated with the tantalum peroxocitrate solution was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 16 was obtained by cooling to room temperature.

The tantalum peroxocitrate solution used in Example 16 is the same as the tantalum peroxocitrate solution used in Example 9, and thus a detailed description thereof will be omitted.

On the other hand, the carbon substrate used in Example 16 is the same as the carbon substrate used in Example 14, and thus a detailed description thereof will be omitted.

(Example 17)

A metal acid compound mixed solution was applied to the entire surface of a carbon substrate (longitudinal dimension × lateral dimension: 50 mm × 50 mm) using a brush (the coating amount was 0.5 g). Next, the carbon substrate coated with the metal acid compound mixed solution was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Example 17 was obtained by cooling to room temperature.

The metal acid compound mixed solution used in Example 17 is a mixed solution adjusted so that a tantalate aqueous solution, a niobate aqueous solution, a titanate aqueous solution, and a zirconium aqueous solution are each 1%, and a hafnate aqueous solution and a silicate aqueous solution are each 0.2% with respect to 100% of the metal acid compound mixed solution. The metal acid compound mixed solution used in Example 17 was obtained as follows.

The tantalate aqueous solution contained in the metal acid compound mixed solution used in Example 17 was obtained in the same manner as the tantalate aqueous solution used in Example 3.

The niobate aqueous solution used in Example 17 was obtained as follows.

100 g of niobium pentoxide was dissolved in 200 g of a 55 mass% aqueous hydrofluoric acid solution, and 830 mL of ion-exchanged water was added thereto to obtain a niobium fluoride aqueous solution ($Nb_2O_5$ = 8.84 mass%).

200 mL of this niobium fluoride aqueous solution was added to 1 L of ammonia water ($NH_3$ concentration: 25 mass%) in a time shorter than 1 minute ($NH_3/Nb_2O_5$ molar ratio = 177.9, $NH_3/HF$ molar ratio = 12.2) to obtain a reaction liquid (pH 11). This reaction liquid was a slurry of a niobate compound hydrate, in other words, a slurry of a niobium-containing precipitate.

Next, this reaction liquid was decanted using a centrifuge and washed until the amount of released fluoride ions reached 100 mg/L or less to obtain a niobium-containing precipitate from which the fluoride ions had been removed. At this time, ammonia water was used as a washing liquid.

Further, the niobium-containing precipitate from which the fluoride ions had been removed was diluted with pure water to obtain a slurry. A part of the niobium-containing precipitation slurry was dried at 110°C for 24 hours and then fired at 1000°C for 4 hours to generate $Nb_2O_5$, and the concentration of $Nb_2O_5$ contained in the niobium-containing precipitation slurry was calculated from the weight thereof.

Then, pure water was added to the niobium-containing precipitation slurry diluted with pure water, and a 50 mass% dimethylamine aqueous solution as an organic nitrogen compound was added thereto so as to have a dimethylamine concentration of 7.2 mass%, thereby preparing a mixture so as to have a $Nb_2O_5$ solid concentration of 24.0 mass%.

The slurry was stirred for 48 hours to obtain the niobate aqueous solution used in Example 17. The pH of the niobate aqueous solution used in Example 17 was 11.0.

The titanate aqueous solution used in Example 17 was obtained as follows.

33.3 g of titanyl sulfate (manufactured by Tayca Corporation, $TiO_2$ concentration: 33.3 mass%, sulfuric acid concentration: 51.1 mass%) was added to 66.7 g of ion-exchanged water, and the mixture was allowed to stand at 90°C or higher for 1 hour for dissolution to obtain an aqueous titanyl sulfate solution (titanium concentration (in terms of TiO2) 11 mass%, sulfuric acid 17 mass%, pH 1 or less).

100 g of this aqueous titanyl sulfate solution was added to 100 g of 50 mass% dimethylamine (the amount of amine of 6.4 mol with respect to 1 mol of sulfuric acid in the aqueous titanyl sulfate solution) over a period of less than 1 minute. Thereafter, the mixture was stirred for 15 minutes to obtain a neutralization reaction liquid (pH 12). This neutralization reaction liquid was a slurry of a titanium-containing substance, in other words, a slurry of a titanium-containing precipitate.

Next, this neutralization reaction liquid was decanted using a centrifuge and washed until the sulfuric acid of the supernatant liquid reached 100 mg/L or less to obtain a titanium-containing precipitate from which the sulfuric acid had been removed. At this time, ammonia water was used as a washing liquid.

$TiO_2$ was generated by firing a part of the titanium-containing precipitate at 1,000°C for 4 hours, and the $TiO_2$ concentration contained in the titanium-containing precipitate was calculated from the mass of $TiO_2$. The $TiO_2$ concentration was 11.0 mass%.

Then, 45 g of the titanium-containing precipitate and 5 g (0.443 mol with respect to 1 mol of Ti in the titanium-containing precipitate) of tetramethylammonium hydroxide pentahydrate (TMAH concentration: 50 mass%) were mixed, and the mixture was shaken with a paint shaker for 24 hours to obtain the titanate aqueous solution used in Example 12. Here, the titanium concentration of the titanate aqueous solution used in Example 17 was 8% in terms of $TiO_2$ and 4.8% in terms of Ti. The pH of the titanate aqueous solution used in Example 17 was 13.7.

The zirconate aqueous solution used in Example 17 was obtained as follows.

3.01 g (0.01 mol) of zirconium sulfate monohydrate was dissolved in 2.50 g (0.014 mol) of a 55 mass% sulfuric acid aqueous solution, and 25 g of ion-exchanged water and 2.5 g (0.026 mol) of 35 mass% hydrogen peroxide water were added thereto ($H_2O_2/ZrO_2$ molar ratio =2.6) to obtain a zirconium sulfate aqueous solution containing 4.3 mass% of zirconium in terms of $ZrO_2$.

Next, the entire amount of the zirconium sulfate aqueous solution was added to 100 g (1.47 mol) of ammonia water ($NH_3$ concentration: 25 mass%) in a time shorter than 1 minute ($NH_3/ZrO_2$ molar ratio = 147, $NH_3/SO_4^{2-}$ molar ratio = 43), and a reaction liquid was obtained by a so-called reverse neutralization reaction. This reaction liquid was a slurry of a zirconate compound hydrate, in other words, a slurry of a zirconium-containing precipitate.

The reaction liquid was decanted using a centrifuge and washed until the conductivity reached 500 $\mu$S/cm or less to obtain a zirconium-containing precipitate from which the sulfur content had been removed. At this time, ammonia water was used as a washing liquid.

Furthermore, the zirconium-containing precipitate from which the sulfur content had been removed was diluted with pure water to obtain a zirconium-containing precipitation slurry from which the sulfur content had been removed. A part of the zirconium-containing precipitation slurry from which the sulfur content had been removed was dried at 110°C for 24 hours and then fired at 1,000°C for 4 hours to generate $ZrO_2$, and the concentration of $ZrO_2$ contained in the zirconium-containing precipitation slurry from which the sulfur content had been removed was calculated from the weight thereof.

Then, the zirconium-containing precipitation slurry from which the sulfur component had been removed diluted with pure water was mixed with 13.7 g (0.023 mol) of 15 mass% tetramethylammonium hydroxide (TMAH) and 28.5 g of ion-exchanged water so that the zirconium concentration of the final mixture was 10 mass% in terms of $ZrO_2$, and the tetramethylammonium hydroxide (TMAH) concentration was 7.2 mass% (molar ratio of $TMAH/ZrO_2$ = 2.2), and the mixture was held for 1 hour while the liquid temperature was maintained at room temperature (25°C) while stirring the mixture to obtain the zirconate aqueous solution used in Example 11. Here, the zirconium concentration of the zirconate aqueous solution used in Example 17 was 8% in terms of $ZrO_2$ and 5.9% in terms of Zr. The pH of the zirconate aqueous solution used in Example 17 was 13.7.

The hafnate aqueous solution used in Example 17 was obtained as follows.

To 76.0 g of hafnium oxide (purity: 98%, powder, manufactured by Kojundo Chemical Lab. Co., Ltd.), 105.1 g of 55 mass% hydrofluoric acid and 796.9 g of pure water were added, heated to 80°C using a water bath, and dissolved by stirring for 24 hours to obtain a hydrofluoric acid solution of a hafnium compound. A hafnium complex aqueous solution obtained by adding 2.2 g of 35 mass% hydrogen peroxide water to 60 g of the hydrofluoric acid solution of a hafnium compound ($H_2O_2$/Hf molar ratio = 1.0) was stirred for 5 minutes, and then gradually added to 377.2 g of 25 mass% ammonia water ($NH_3$/Hf molar ratio = 250). Thereafter, the mixture was stirred for 5 minutes to obtain a neutralization reaction liquid containing hafnium hydroxide as a deposit.

Next, the neutralization reaction liquid was decanted using a centrifuge to recover a deposit (containing hafnium hydroxide). The recovered deposit and 200 g of 25 mass% ammonia water were mixed and slurried, and then decanted again to recover the deposit. The decantation and the recovery step of the deposit (containing hafnium hydroxide) were repeated three times.

Then, 31.1 g of 25 mass% TMAH was added to the recovered deposit (containing hafnium hydroxide) to obtain a mixed solution. Pure water was added until the total weight of the mixed solution reached 77.7 g so that the final hafnium concentration was 6 mass% in terms of $HfO_2$, and the mixed solution was stirred for 6 hours to obtain a hafnate aqueous solution used in Example 17. The pH of the hafnate aqueous solution used in Example 17 was 14.8.

The silicate aqueous solution used in Example 17 was obtained as follows.

To 11.0 g of tetraethoxysilane (TEOS, manufactured by TOKYO OHKA KOGYO CO., LTD.) as a raw material substance containing silicon, 0.1 g of acetic acid (manufactured by Hayashi Pure Chemical Ind., Ltd.) as an acidic aqueous solution, 15 g of industrial ethanol (Solmix AP-7 (mixed alcohol solvent containing 85.5 mass% of ethanol, 9.6 mass% of 1-propanol, 4.9 mass% of 2-propanol, and 0.2 mass% or less of water), manufactured by TOYO SEKIYU KAGAKU K.K.), and 8 g of pure water were added in a 100 mL beaker, and the mixture was mixed at room temperature (25°C) for 20 hours while being stirred with a stirrer chip to obtain 6 g of a dried silicon compound as a transparent deposit.

Next, to 6 g of the obtained dried silicon compound were added 2.6 g of 40 mass% methylamine (manufactured by MITSUBISHI GAS CHEMICAL COMPANY, INC.) and 8.9 g of pure water, and the mixture was mixed at room temperature (25°C) for 10 hours while being stirred with a stirrer chip to obtain the silicate aqueous solution used in Example 17.

When the tantalate aqueous solution, the niobate aqueous solution, the titanate aqueous solution, the zirconium aqueous solution, the hafnate aqueous solution, and the silicate aqueous solution thus obtained were adjusted so that the tantalate aqueous solution, the niobate aqueous solution, the titanate aqueous solution, and the zirconium aqueous solution were each 1%, and the hafnate aqueous solution and the silicate aqueous solution were each 0.2% with respect to 100% of the metal acid compound mixed solution used in Example 17, whereby the metal acid compound mixed solution used in Example 17 was obtained.

(Example 18)

A carbon substrate (longitudinal dimension × lateral dimension × thickness dimension: 50 mm × 50 mm × 3 mm) was immersed in a zirconate aqueous solution (about 10 ml) in a 50 mL beaker, and the inside of the carbon substrate was impregnated with the zirconate aqueous solution under a reduced pressure condition (so-called vacuum impregnation) (the impregnation amount was 0.98 g). Next, the carbon substrate impregnated with the zirconate aqueous solution was placed in an electric furnace and dried in the electric furnace heated to 100°C for 60 minutes. Thereafter, the carbon substrate was heated in the electric furnace heated to 1500°C for 1 hour under an Ar atmosphere. Then, the coating structure according to Example 18 was obtained by cooling to room temperature.

The zirconate aqueous solution used in Example 18 is the same as the zirconate aqueous solution used in Example 17, and thus a detailed description thereof will be omitted.

On the other hand, the carbon substrate used in Example 18 is the same as the carbon substrate used in Example 1, and thus a detailed description thereof will be omitted.

(Example 19)

A carbon substrate (longitudinal dimension × lateral dimension × thickness dimension: 50 mm × 50 mm × 3 mm) was immersed in a titanate aqueous solution (about 10 ml) in a 50 mL beaker, and the inside of the carbon substrate was impregnated with the titanate aqueous solution under a reduced pressure condition (the impregnation amount was 0.96 g). Next, the carbon substrate impregnated with the titanate aqueous solution was placed in an electric furnace and dried in the electric furnace heated to 100°C for 60 minutes. Thereafter, the carbon substrate was heated in the electric furnace heated to 1500°C for 1 hour under an Ar atmosphere. Then, the coating structure according to Example 19 was obtained by cooling to room temperature.

The titanate aqueous solution used in Example 19 is the same as the titanate aqueous solution used in Example 17, and thus a detailed description thereof will be omitted.

On the other hand, the carbon substrate used in Example 19 is the same as the carbon substrate used in Example 1, and thus a detailed description thereof will be omitted.

(Comparative Example 1)

Comparative Example 1 is a carbon substrate obtained by processing a surface of the carbon substrate used in Example 1 by repeating discharge using a discharge electrode including a tantalum electrode.

(Comparative Example 2)

A polyolefin-based polymer copolymer neutralized salt (ZAIKTHENE A manufactured by Sumitomo Seika Chemicals Company, Limited.) was applied to the entire surface of a carbon substrate (longitudinal dimension × lateral dimension × thickness dimension: 50 mm × 50 mm × 3 mm) using a brush. Next, the carbon substrate coated with the polyolefin-based polymer copolymer neutralized salt was placed in an electric furnace and dried in the electric furnace heated to 110°C for 10 minutes. Thereafter, the carbon substrate was heated in the electric furnace heated to 1500°C for 1 hour under an Ar atmosphere. Then, the coating structure according to Comparative Example 2 was obtained by cooling to room temperature.

The polyolefin-based polymer copolymer neutralized salt used in Comparative Example 2 is the same as the polyolefin-based polymer copolymer neutralized salt used in Example 3, and thus a detailed description thereof will be omitted.

On the other hand, the carbon substrate used in Comparative Example 2 is the same as the carbon substrate used in Example 1, and thus a detailed description thereof will be omitted.

(Comparative Example 3)

Comparative Example 3 is the same as the carbon substrate used in Example 7, and thus a detailed description thereof will be omitted.

(Comparative Example 4)

Comparative Example 4 is the same as the carbon substrate used in Example 10, and thus a detailed description thereof will be omitted.

(Comparative Example 5)

Comparative Example 5 is the same as the carbon substrate used in Example 11, and thus a detailed description thereof will be omitted.

(Comparative Example 6)

Comparative Example 6 is the same as the carbon substrate used in Example 14, and thus a detailed description thereof will be omitted.

(Comparative Example 7)

Comparative Example 7 is the same as the carbon substrate used in Example 1, and thus a detailed description thereof will be omitted.

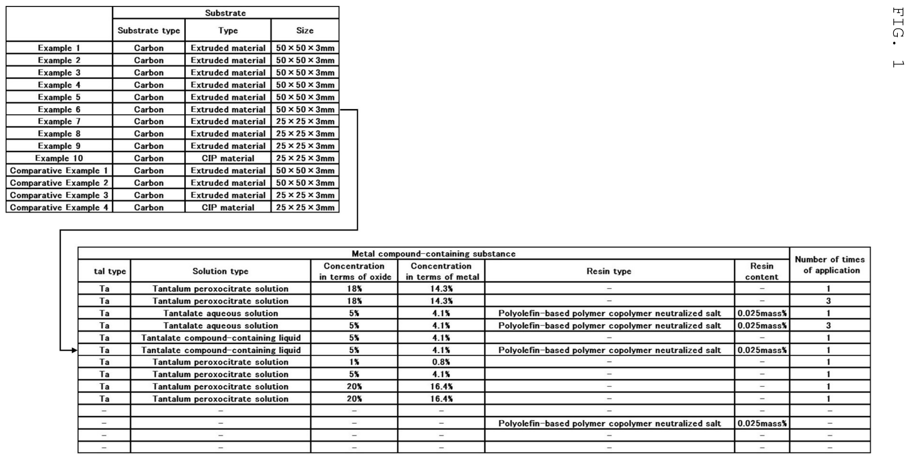

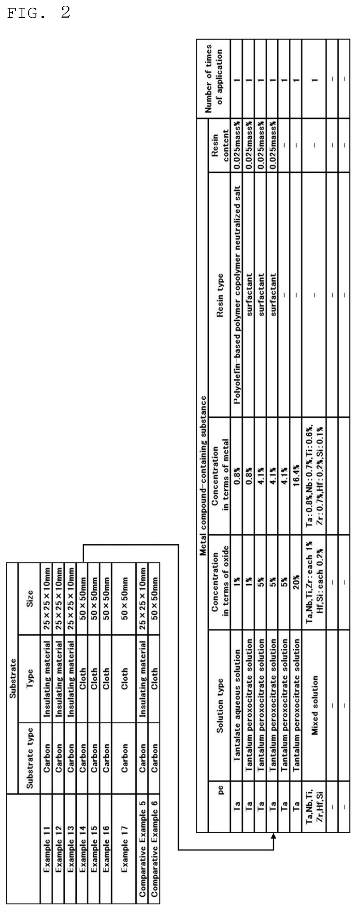

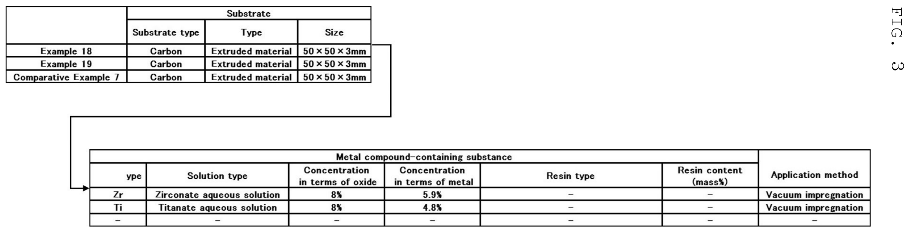

Then, the following physical property values were measured for the coating structures according to Examples 1 to 19, the carbon substrates according to Comparative Examples 1, and 3 to 7, and the coating structure according to Comparative Example 2, and an evaluation test was performed. Hereinafter, a method for measuring the physical property values and a test method for the evaluation test will be described. The physical property values of the coating structures according to Examples 1 to 10, the carbon substrates according to Comparative Examples 1, and 3 to 4, and the coating structure according to Comparative Example 2 are shown in Fig. 1. In addition, the physical property values of the coating structures according to Examples 11 to 17 and the carbon substrates according to Comparative Examples 5 and 6 are shown in Fig. 2. Further, the physical property values of the coating structures according to Examples 18 and 19 and the carbon substrate according to Comparative Example 7 are shown in Fig. 3.

<Element analysis>

The sample was appropriately diluted with dilute hydrochloric acid as necessary, and the mass fraction in terms of metal was measured in accordance with JIS K0116:2014 using ICP emission spectrometry (manufactured by Agilent Technologies, Inc.: AG-5110).

<Dynamic light scattering>

The evaluation of the particle size distribution of the metal compound-containing substances used in Examples 1 to 19 was performed in accordance with JIS Z 8828:2019 "Particle size analysis-dynamic light scattering" using a zeta potential/particle size/molecular weight analyzer (manufactured by Otsuka Electronics Co., Ltd.: ELSZ-2000). Also, in order to remove dust and the like in the solution to be measured immediately before measurement, the content was filtered with a filter having a pore size of 2 $\mu$m, and subjected to ultrasonic treatment at 28 kHz for 3 minutes with an ultrasonic cleaner (manufactured by AS ONE Corporation: VS-100III). The particle size (D50) refers to a median diameter (D50) that is a particle size indicating a 50% cumulative value of a cumulative distribution curve.

<Light transmittance measurement>

4 ml of the metal compound-containing substances used in Examples 1 to 19 was placed in a quartz cell having an optical path length of 5.0 mm, and the light transmittance of the metal compound-containing substances used in Examples 1 to 19 in the wavelength region of 500 nm to 700 nm was measured according to the light transmittance measurement conditions or the light transmittance measurement conditions (containing Si) described above using a spectrophotometer.

<Heat resistance test>

The coating structures according to Examples 1 to 19, the carbon substrates according to Comparative Examples 1, and 3 to 7, and the coating structure according to Comparative Example 2 were subjected to a heat resistance test under the following three test conditions.

<Heat resistance test 1>

First, the weight before the heat resistance test 1 (hereinafter, referred to as the weight before test 1.) was measured for each of the coating structures according to Examples 1 to 17, the carbon substrates according to Comparative Examples 1, and 3 to 6, and the coating structure according to Comparative Example 2. Next, the coating structures according to Examples 1 to 17, the carbon substrates according to Comparative Examples 1, and 3 to 6, and the coating structure according to Comparative Example 2 were placed in a tubular furnace and fired at a heating temperature of 700°C for a heating time of 90 minutes in an air atmosphere. The fired coating structures according to Examples 1 to 17, the carbon substrates according to Comparative Examples 1, and 3 to 6, and the coating structure according to Comparative Example 2 were taken out from the tubular furnace, and the weight after the heat resistance test 1 (hereinafter, referred to as the weight after test 1.) was measured for each. Then, for the coating structures according to Examples 1 to 17, the carbon substrates according to Comparative Examples 1, and 3 to 6, and the coating structure according to Comparative Example 2, the weight change (attenuation rate) in the heat resistance test 1 was calculated from the following formula (1) from the weight before test 1 and the weight after test 1.
[Mathematical formula 1] Attenuation rate (%) = (Weight after test 1) - (Weight before test 1) / (Weight before test 1) $\times$ 100     (1)

The test results of the heat resistance test 1 of the coating structures according to Examples 1 to 10, the carbon substrates according to Comparative Examples 1, 3, and 4, and the coating structure according to Comparative Example 2 are shown in Table 1. In addition, the test results of the heat resistance test 1 of the coating structures according to Examples 11 to 17 and the carbon substrates according to Comparative Examples 6 and 7 are shown in Table 2.

<Heat resistance test 2>

The weight before the heat resistance test 2 (hereinafter, referred to as the weight before test 2.) was measured for each of the coating structures according to Examples 5 and 6, the carbon substrate according to Comparative Example 1, and the coating structure according to Comparative Example 2. Next, the coating structures according to Examples 5 and 6, the carbon substrate according to Comparative Example 1, and the coating structure according to Comparative Example 2 were placed in a tubular furnace, and fired at a heating temperature of 700°C for a heating time of 90 minutes in a mixed gas atmosphere of 5 vol% $O_2$-95 vol% $N_2$. The fired coating structures according to Examples 5 to 6, the carbon substrate according to Comparative Example 1, and the coating structure according to Comparative Example 2 were taken out from the tubular furnace, and the weight after the heat resistance test 2 (hereinafter, referred to as the weight after test 2.) was measured for each. Then, for the coating structures according to Examples 5 and 6, the carbon substrate according to Comparative Example 1, and the coating structure according to Comparative Example 2, the weight change (attenuation rate) in the heat resistance test 2 was calculated from the following formula (2) from the weight before test 2 and the weight after test 2.
[Mathematical formula 2] Attenuation rate (%) = (Weight after test 2) - (Weight before test 2) / (Weight before test 2) $\times$ 100

The test results of the heat resistance test 2 of the coating structures according to Examples 5 and 6, the carbon substrate according to Comparative Example 1, and the coating structure according to Comparative Example 2 are shown in Table 3.

<Heat resistance test 3>

First, the weight before the heat resistance test 3 (hereinafter, referred to as the weight before test 3.) was measured for each of the coating structures according to Examples 18 and 19 and the carbon substrate according to Comparative Example 7. Next, the coating structures according to Examples 18 and 19 and the carbon substrate according to Comparative Example 7 were placed in a tubular furnace and fired at a heating temperature of 600°C for a heating time of 180 minutes in an air atmosphere. The fired coating structures according to Examples 18 and 19 and the carbon substrate according to Comparative Example 7 were taken out from the tubular furnace, and the weight after the heat resistance test 3 (hereinafter, referred to as the weight after test 3.) was measured for each. Then, for the coating structures according to Examples 18 and 19 and the carbon substrate according to Comparative Example 7, the weight change (attenuation rate) in the heat resistance test 3 was calculated from the following formula (3) from the weight before test 3 and the weight after test 3.
[Mathematical formula 3] Attenuation rate (%) = (Weight after test 3) - (Weight before test 3) / (Weight before test 3) $\times$ 100     (3)

The test results of the heat resistance test 3 of the coating structures according to Examples 18 and 19 and the carbon substrate according to Comparative Example 7 are shown in Table 4.

[Table 1]

| | Heat resistance test 1 | | | |
| --- | --- | --- | --- | --- |
| | Atmosphere | Heating temperature | Heating time | Attenuation rate |
| Example 1 | Air | 700°C | 90min | -10.0% |
| Example 2 | Air | 700°C | 90min | -4.8% |
| Example 3 | Air | 700°C | 90min | -8.3% |

(continued)

| | Heat resistance test 1 | | | |
|---|---|---|---|---|
| | Atmosphere | Heating temperature | Heating time | Attenuation rate |
| Example 4 | Air | 700°C | 90min | -7.7% |
| Example 5 | Air | 700°C | 90min | -9.0% |
| Example 6 | Air | 700°C | 90min | -8.8% |
| Example 7 | Air | 700°C | 90min | -26.1% |
| Example 8 | Air | 700°C | 90min | -24.1% |
| Example 9 | Air | 700°C | 90min | -19.5% |
| Example 10 | Air | 700°C | 90min | -4.0% |
| Comparative Example 1 | Air | 700°C | 90min | -15.8% |
| Comparative Example2 | Air | 700°C | 90min | -17.1% |
| Comparative Example3 | Air | 700°C | 90min | -27.9% |
| Comparative Example 4 | Air | 700°C | 90min | -9.9% |

[Table 2]

| | Heat resistance test 1 | | | |
|---|---|---|---|---|
| | Atmosphere | Heating temperature | Heating time | Attenuation rate |
| Example 11 | Air | 700°C | 90min | -72.5% |
| Example 12 | Air | 700°C | 90min | -76.7% |
| Example 13 | Air | 700°C | 90min | -71.0% |
| Example 14 | Air | 700°C | 90min | -57.9% |
| Example 15 | Air | 700°C | 90min | -29.4% |
| Example 16 | Air | 700°C | 90min | -39.5% |
| Example 17 | Air | 700°C | 90min | -62.3% |
| Comparative Example 5 | Air | 700°C | 90min | -86.3% |
| Comparative Example 6 | Air | 700°C | 90min | -99.7% |

[Table 3]

| | Heating resistance test 2 | | | |
|---|---|---|---|---|
| | Atmosphere | Heating temperature | Heating time | Attenuation rate |
| Example 5 | $5\%O_2$-$95\%N_2$ mixed gas | 700°C | 90min | -1.8% |
| Example 6 | $5\%O_2$-$95\%N_2$ mixed gas | 700°C | 90min | -0.3% |
| Comparative Example 1 | $5\%O_2$-$95\%N_2$ mixed gas | 700°C | 90min | -2.7% |
| Comparative Example 2 | $5\%O_2$-$95\%N_2$ mixed gas | 700°C | 90min | -2.7% |

[Table 4]

| | Heating resistance test 3 | | | |
|---|---|---|---|---|
| | Atmosphere | Heating temperature | Heating time | Attenuation rate |
| Example 18 | Air | 600°C | 180min | -31.5% |
| Example 19 | Air | 600°C | 180min | -31.8% |

(continued)

| | Heating resistance test 3 | | | |
|---|---|---|---|---|
| | Atmosphere | Heating temperature | Heating time | Attenuation rate |
| Comparative Example 7 | Air | 600°C | 180min | -35.3% |

The coating structures according to Examples 1 to 17 have a uniform metal-carbon composite coating on a carbon substrate by applying a metal compound-containing substance onto the carbon substrate and heating the carbon substrate coated with the metal compound-containing substance.

The coating structures according to Examples 18 and 19 have a uniform metal-carbon composite coating on a carbon substrate by immersing the carbon substrate in a metal compound-containing substance and heating the immersed carbon substrate.

Since the attenuation rates in the heat resistance test 1 of the coating structures according to Examples 1 to 6 were 10% or less, weight loss due to oxidation of the carbon substrate was not observed, and the heat resistance of the carbon substrate could be improved by the metal-carbon composite coating formed on the carbon substrate. On the other hand, the attenuation rates in the heat resistance test 1 of the carbon substrate according to Comparative Example 1 and the coating structure according to Comparative Example 2 were 15.8% and 17.1%, respectively.

The attenuation rates in the heat resistance test 1 of the coating structures according to Examples 7 to 9 were slightly reduced as compared with the attenuation rate in the heat resistance test 1 of the carbon substrate according to Comparative Example 3. Also, the attenuation rate in the heat resistance test 1 of the coating structure according to Example 10 was reduced to half or less of the attenuation rate in the heat resistance test 1 of the carbon substrate according to Comparative Example 4.

The attenuation rates in the heat resistance test 1 of the coating structures according to Examples 11 to 13 were reduced as compared with the attenuation rate in the heat resistance test 1 of the carbon substrate according to Comparative Example 5. Further, the attenuation rates in the heat resistance test 1 of the coating structures according to Examples 14 to 17 were significantly reduced as compared with the attenuation rate in the heat resistance test 1 of the carbon substrate according to Comparative Example 6.

Furthermore, in the coating structures according to Examples 5 to 6, since the attenuation rate in the heat resistance test 2 was 2% or less, weight loss due to oxidation of the carbon substrate was not observed, and the heat resistance of the carbon substrate could be improved by the metal-carbon composite coating formed on the carbon substrate. On the other hand, the attenuation rates in the heat resistance test 2 of the carbon substrate according to Comparative Example 1 and the coating structure according to Comparative Example 2 were 2.7% and 2.7%, respectively.

The attenuation rates in the heat resistance test 3 of the coating structures according to Examples 18 and 19 were slightly reduced as compared with the attenuation rate in the heat resistance test 3 of the carbon substrate according to Comparative Example 7.

From the results of the heat resistance tests 1 to 3 described above, the heat resistance of the carbon substrate could be improved by the metal-carbon composite coating formed on the carbon substrate regardless of the type of metal element contained in the metal-carbon composite coating and the size and type of the carbon substrate.

The invention disclosed in the present description includes, in addition to the configurations of the respective inventions and the embodiments, those specified by changing these partial configurations to other configurations disclosed in the present description, those specified by adding other configurations disclosed in the present description to these configurations, or those specified by deleting these partial configurations to an extent that a partial action and effect can be obtained and forming a superordinate concept.

Industrial Applicability

The method for producing a coating structure according to the present invention is suitable as a method for producing a coating structure because a uniform metal-carbon composite coating can be formed on a carbon substrate regardless of the size and shape of the substrate. Specifically, since the method for producing a coating structure according to the present invention can form a uniform metal-carbon composite coating on a carbon substrate, the heat resistance and the reaction resistance are improved, and the life of the carbon substrate is extended, whereby the waste can be reduced, and the energy cost in the disposal of the waste can also be reduced. Furthermore, in the method for producing a coating structure according to the present invention, a uniform metal-carbon composite coating can be formed on a carbon substrate by applying a metal compound-containing substance onto the carbon substrate, immersing the metal compound-containing substance in the carbon substrate, and heating the carbon substrate, so that the energy cost can be reduced. In addition, the coating structure according to the present invention is suitable as a coating structure

**EP 4 737 428 A1**

because a uniform metal-carbon composite coating is formed on a carbon substrate regardless of the size and shape of the substrate. Specifically, since the coating structure according to the present invention has a uniform metal-carbon composite coating on the carbon substrate, the heat resistance and the reaction resistance are improved, and the life of the carbon substrate is extended, whereby the waste can be reduced, and the energy cost in the disposal of the waste can also be reduced. These points lead to achieving sustainable management and efficient advantages of natural resources, and decarbonization (carbon neutral).

**Claims**

1. A method for producing a coating structure having a metal-carbon composite coating on a carbon substrate, the method comprising:

   an application step of applying a metal compound-containing substance onto the carbon substrate; and
   a heating step of heating the coated carbon substrate to form a metal-carbon composite coating on the carbon substrate.

2. A method for producing a coating structure having a metal-carbon composite coating on a carbon substrate, the method comprising:

   an immersion step of immersing the carbon substrate in a metal compound-containing substance; and
   a heating step of heating the immersed carbon substrate to form a metal-carbon composite coating on the carbon substrate.

3. The method for producing a coating structure according to claim 2, wherein in the immersion step, the carbon substrate is impregnated with the metal compound-containing substance under reduced pressure or vacuum.

4. The method for producing a coating structure according to any one of claims 1 to 3, further comprising a drying step between the application step or the immersion step and the heating step.

5. The method for producing a coating structure according to any one of claims 1 to 3, wherein the metal compound-containing substance contains a compound of at least one metal element selected from Ti, Nb, Mo, Hf, Ta, W, Zr, and Si.

6. The method for producing a coating structure according to claim 5, wherein a content of a compound of at least one metal element selected from Ti, Nb, Mo, Hf, Ta, W, Zr, and Si in the metal compound-containing substance is more than 0 mass% and 35 mass% or less in terms of metal.

7. The method for producing a coating structure according to claim 5, wherein the metal compound-containing substance contains a Ta compound.

8. The method for producing a coating structure according to any one of claims 1 to 3, wherein the metal compound-containing substance has a maximum value of light transmittance in a wavelength region of 500 nm to 700 nm of 70%T or more.

9. The method for producing a coating structure according to any one of claims 1 to 3, wherein the metal compound-containing substance has a particle size (D50) of particles in the metal compound-containing substance in dynamic light scattering of 3,000 nm or less.

10. The method for producing a coating structure according to any one of claims 1 to 3, wherein the metal compound-containing substance has a pH of 6.5 or more and 13.5 or less.

11. The method for producing a coating structure according to any one of claims 1 to 3, wherein in the heating step, a heating temperature is 1000°C or higher and 3500°C or lower, and a heating time is 0.5 hours or more and 2 hours or less.

12. The method for producing a coating structure according to claim 11, wherein in the heating step, a heating temperature is 1400°C or higher and 2000°C or lower.

23

13. A coating structure in which a metal-carbon composite coating is formed on a carbon substrate, wherein the metal-carbon composite coating has been formed by heating the carbon substrate coated or impregnated with the metal compound-containing substance.

14. A metal compound-containing substance for a metal-carbon composite coating formed on a carbon substrate, wherein the metal compound-containing substance reacts with the carbon substrate to form a metal-carbon composite coating.

FIG. 1

| | Substrate | | |
|---|---|---|---|
| | Substrate type | Type | Size |
| Example 1 | Carbon | Extruded material | 50 × 50 × 3mm |
| Example 2 | Carbon | Extruded material | 50 × 50 × 3mm |
| Example 3 | Carbon | Extruded material | 50 × 50 × 3mm |
| Example 4 | Carbon | Extruded material | 50 × 50 × 3mm |
| Example 5 | Carbon | Extruded material | 50 × 50 × 3mm |
| Example 6 | Carbon | Extruded material | 50 × 50 × 3mm |
| Example 7 | Carbon | Extruded material | 25 × 25 × 3mm |
| Example 8 | Carbon | Extruded material | 25 × 25 × 3mm |
| Example 9 | Carbon | Extruded material | 25 × 25 × 3mm |
| Example 10 | Carbon | CIP material | 25 × 25 × 3mm |
| Comparative Example 1 | Carbon | Extruded material | 50 × 50 × 3mm |
| Comparative Example 2 | Carbon | Extruded material | 50 × 50 × 3mm |
| Comparative Example 3 | Carbon | Extruded material | 25 × 25 × 3mm |
| Comparative Example 4 | Carbon | CIP material | 25 × 25 × 3mm |

| Metal compound-containing substance | | | | | | Number of times of application |
|---|---|---|---|---|---|---|
| tal type | Solution type | Concentration in terms of oxide | Concentration in terms of metal | Resin type | Resin content | |
| Ta | Tantalum peroxocitrate solution | 18% | 14.3% | – | – | 1 |
| Ta | Tantalum peroxocitrate solution | 18% | 14.3% | – | – | 3 |
| Ta | Tantalate aqueous solution | 5% | 4.1% | Polyolefin-based polymer copolymer neutralized salt | 0.025mass% | 1 |
| Ta | Tantalate aqueous solution | 5% | 4.1% | Polyolefin-based polymer copolymer neutralized salt | 0.025mass% | 3 |
| Ta | Tantalate compound-containing liquid | 5% | 4.1% | – | – | 1 |
| Ta | Tantalate compound-containing liquid | 5% | 4.1% | Polyolefin-based polymer copolymer neutralized salt | 0.025mass% | 1 |
| Ta | Tantalum peroxocitrate solution | 1% | 0.8% | – | – | 1 |
| Ta | Tantalum peroxocitrate solution | 5% | 4.1% | – | – | 1 |
| Ta | Tantalum peroxocitrate solution | 20% | 16.4% | – | – | 1 |
| Ta | Tantalum peroxocitrate solution | 20% | 16.4% | – | – | 1 |
| – | – | – | – | – | – | – |
| – | – | – | – | Polyolefin-based polymer copolymer neutralized salt | 0.025mass% | – |
| – | – | – | – | – | – | – |
| – | – | – | – | – | – | – |

FIG. 2

| | Substrate | | |
|---|---|---|---|
| | Substrate type | Type | Size |
| Example 11 | Carbon | Insulating material | 25 × 25 × 10mm |
| Example 12 | Carbon | Insulating material | 25 × 25 × 10mm |
| Example 13 | Carbon | Insulating material | 25 × 25 × 10mm |
| Example 14 | Carbon | Cloth | 50 × 50mm |
| Example 15 | Carbon | Cloth | 50 × 50mm |
| Example 16 | Carbon | Cloth | 50 × 50mm |
| Example 17 | Carbon | Cloth | 50 × 50mm |
| Comparative Example 5 | Carbon | Insulating material | 25 × 25 × 10mm |
| Comparative Example 6 | Carbon | Cloth | 50 × 50mm |

| Metal compound-containing substance | | | | | | Number of times of application |
|---|---|---|---|---|---|---|
| pe | Solution type | Concentration in terms of oxide | Concentration in terms of metal | Resin type | Resin content | |
| Ta | Tantalate aqueous solution | 1% | 0.8% | Polyolefin-based polymer copolymer neutralized salt | 0.025mass% | 1 |
| Ta | Tantalum peroxocitrate solution | 1% | 0.8% | surfactant | 0.025mass% | 1 |
| Ta | Tantalum peroxocitrate solution | 5% | 4.1% | surfactant | 0.025mass% | 1 |
| Ta | Tantalum peroxocitrate solution | 5% | 4.1% | surfactant | 0.025mass% | 1 |
| Ta | Tantalum peroxocitrate solution | 5% | 4.1% | – | – | 1 |
| Ta | Tantalum peroxocitrate solution | 20% | 16.4% | – | – | 1 |
| Ta,Nb,Ti, Zr,Hf,Si | Mixed solution | Ta,Nb,Ti,Zr: each 1% Hf,Si: each 0.2% | Ta: 0.8%,Nb: 0.7%,Ti: 0.6%, Zr: 0.7%,Hf: 0.2%,Si: 0.1% | – | – | 1 |
| – | – | – | – | – | – | – |
| – | – | – | – | – | – | – |

FIG. 3

| | Substrate | | |
|---|---|---|---|
| | Substrate type | Type | Size |
| Example 18 | Carbon | Extruded material | 50×50×3mm |
| Example 19 | Carbon | Extruded material | 50×50×3mm |
| Comparative Example 7 | Carbon | Extruded material | 50×50×3mm |

| Metal compound-containing substance | | | | | | | Application method |
|---|---|---|---|---|---|---|---|
| ype | Solution type | Concentration in terms of oxide | Concentration in terms of metal | Resin type | Resin content (mass%) | | |
| Zr | Zirconate aqueous solution | 8% | 5.9% | – | – | | Vacuum impregnation |
| Ti | Titanate aqueous solution | 8% | 4.8% | – | – | | Vacuum impregnation |
| – | – | – | – | – | – | | – |

## INTERNATIONAL SEARCH REPORT

International application No.

**PCT/JP2024/023628**

### A. CLASSIFICATION OF SUBJECT MATTER

*C04B 35/52*(2006.01)i; *B32B 9/00*(2006.01)i; *B32B 9/04*(2006.01)i; *C01B 32/914*(2017.01)i; *C04B 41/87*(2006.01)i
FI: C04B35/52; B32B9/00 A; B32B9/04; C01B32/914; C04B41/87 S

According to International Patent Classification (IPC) or to both national classification and IPC

### B. FIELDS SEARCHED

Minimum documentation searched (classification system followed by classification symbols)

C04B35/52; B32B9/00; B32B9/04; C01B32/914; C04B41/87

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 52-6714 A (DIRECTOR OF INSTITUTE FOR MATERIALS RESEARCH, TOHOKU UNIVERSITY) 19 January 1977 (1977-01-19) claims, page 1, left column, line 12 to right column, line 10, and page 5, lower left column, line 2 to page 8, lower right column, line 3 | 1-6, 8-14 |
| A | | 7 |
| X | JP 2017-75075 A (KABUSHIKI KAISHA TOYOTA CHUO KENKYUSHO) 20 April 2017 (2017-04-20) claim 5, paragraphs [0001], [0009]-[0080] | 1-13 |
| X | WO 2017/082147 A1 (NIPPON CARBON CO., LTD.) 18 May 2017 (2017-05-18) claims 1, 3-7, paragraphs [0001], [0014]-[0059] | 1-6, 8-13 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 August 2024** | **03 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/023628**

| Patent document cited in search report | | | Publication date (day/month/year) | Patent family member(s) | Publication date (day/month/year) |
|---|---|---|---|---|---|
| JP | 52-6714 | A | 19 January 1977 | (Family: none) | |
| JP | 2017-75075 | A | 20 April 2017 | (Family: none) | |
| WO | 2017/082147 | A1 | 18 May 2017 | US 2018/0327322 A1 claims 1, 3-7, paragraphs [0001], [0023]-[0093] | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004009515 A